(19) Europäisches Patentamt
European Patent Office
Office européen des brevets

(11) **EP 3 094 394 B1**

(12) **FASCICULE DE BREVET EUROPEEN**

(45) Date de publication et mention de la délivrance du brevet:
**10.01.2018 Bulletin 2018/02**

(21) Numéro de dépôt: **14814979.2**

(22) Date de dépôt: **27.11.2014**

(51) Int Cl.:
*B01D 21/28* (2006.01)   *B01F 3/04* (2006.01)
*C02F 1/24* (2006.01)   *C02F 1/52* (2006.01)
*C02F 11/14* (2006.01)   *C02F 1/20* (2006.01)
*C02F 1/56* (2006.01)   *C02F 1/74* (2006.01)
*C02F 11/12* (2006.01)

(86) Numéro de dépôt international:
**PCT/FR2014/053066**

(87) Numéro de publication internationale:
**WO 2015/079177 (04.06.2015 Gazette 2015/22)**

(54) **PROCÉDÉ ET DISPOSITIF DE TRAITEMENT D'UNE BOUE ORGANIQUE**

VERFAHREN UND VORRICHTUNG ZUR BEHANDLUNG VON ORGANISCHEM SCHLAMM

METHOD AND DEVICE FOR TREATING AN ORGANIC SLUDGE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.11.2013 FR 1361696**

(43) Date de publication de la demande:
**23.11.2016 Bulletin 2016/47**

(73) Titulaire: **Orege**
**78117 Toussus-le-Noble (FR)**

(72) Inventeurs:
• **CAPEAU, Patrice**
**F-13013 Marseille (FR)**

• **GENDROT, Pascal**
**F-78350 Jouy en Josas (FR)**

(74) Mandataire: **Benech, Frédéric**
**Cabinet Benech**
**15, rue d'Astorg**
**75008 Paris (FR)**

(56) Documents cités:
**FR-A1- 2 966 818    US-A1- 2008 047 903**

Remarques:
Le dossier contient des informations techniques présentées postérieurement au dépôt de la demande et ne figurant pas dans le présent fascicule.

**Description**

La présente invention concerne un procédé de traitement d'une boue organique, et plus particulièrement de traitement, de conditionnement, de coagulation, de floculation et d'oxydation d'émulsions, d'eaux fortement colloïdales et/ou de boues liquides, par éclatement, dispersion et diffusion de celles-ci à l'intérieur d'un gaz sous pression.

Elle concerne également un dispositif de traitement (conditionnement, coagulation, floculation et oxygénation) d'une boue organique mettant en oeuvre un tel procédé.

L'invention trouve une application particulièrement importante bien que non exclusive dans le domaine de la réduction de volume des boues organiques ou biologiques, en vue de leur traitement ou d'une utilisation ultérieure.

On connaît déjà des procédés de séparation entre de la matière solide en suspension et l'effluent liquide dans lequel elle se trouve.

Les techniques qui existent d'extraction de l'eau hors des boues sont essentiellement le compactage qui augmente la teneur (% en poids du mélange total) en composé solide de l'ordre de 5%, la centrifugation ou la filtration qui augmentent l'une et l'autre la teneur en composé solide de 18 à 25%, et enfin le séchage (par combustion ou épandage pendant plusieurs semaines) qui augmente la teneur en composé solide de 90 à 95%, et ce en sachant que la teneur en poids de composé solide des boues d'épuration avant le traitement est en général comprise entre 0,1 à 1% du poids total de l'effluent.

Tous ces traitements connus de l'art antérieur présentent des inconvénients, soit liés au fait que la dessiccation n'est pas suffisante (compactage, centrifugation, filtration) soit liés au temps de traitement (séchage) ou à la consommation importante d'énergie (combustion).

On connaît également (FR 2 175 897) un procédé de traitement des déchets de boues où on alimente un circuit étanche comprenant une cuve, circuit dans lequel on recircule pendant plusieurs dizaines de minutes en introduisant un gaz contenant de l'oxygène dans le circuit en amont de la cuve.

La rétention de la boue activée dans la cuve pendant une période de temps suffisante pour permettre la sursaturation par le gaz contenant de l'oxygène est indiquée comme permettant l'élimination de façon importante des solides en suspension.

Un tel procédé, outre qu'il est long, met en oeuvre un dispositif assez compliqué, source de nombreux colmatages.

On connaît également un procédé de décolloïdation par choc d'au moins deux flux en vis à vis dans une petite enceinte dans laquelle on bulle de l'air.

Bien qu'assez efficace ce procédé est essentiellement applicable à des boues très minéralisées (c'est à dire présentant un % de matière organique sur 100% en poids de matière sèche inférieur à de 5 à 15%).

On connaît aussi (FR 2 966 818) un procédé de séparation entre liquide et matière en suspension d'une boue, dans lequel on injecte de la boue et de l'air à gros débit dans une enceinte de faible volume.

Le procédé permet la séparation de l'eau liée aux colloïdes organiques.

Un tel procédé ne permet pas cependant l'élimination de certains éléments contaminant les boues organiques, par exemple chargées en ammoniaque.

L'asséchage des boues obtenues avec un tel traitement, peut par ailleurs être amélioré, un gain ne serait que de un % en siccité par rapport à l'art antérieur entrainant des économies importantes en transport et en coût d'élimination.

Ainsi, pour les utilisateurs de station de traitement de boues, le retour sur investissement en coût d'exploitation justifie-t-il très vite une petite amélioration.

La présente invention vise à fournir un procédé et un dispositif répondant mieux que ceux antérieurement connus aux exigences de la pratique, notamment en ce qu'elle va permettre une déshydratation améliorée, en particulier lorsqu'elle est mise en oeuvre en combinaison avec des techniques connues de centrifugation ou pressage/filtration, et ce tout en permettant une meilleure décontamination des boues notamment chargées en ammoniaque, de façon très rapide, l'utilisation du procédé selon l'invention ne nécessitant que quelques secondes ou minutes avant l'obtention d'un résultat.

En particulier, ce procédé permet d'obtenir d'excellents résultats pour des boues très organiques, c'est à dire essentiellement chargées en phospholipides, polysaccharides, résidus bactériens, acides gras volatils etc...

Il est également possible d'obtenir un rendement optimisé lorsqu'il est combiné avec un outil de séparation complémentaire disposé en aval du dispositif (filtre à bande ou centrifugation), améliorant de plus de 10% la dessiccation, par exemple de 25%.

Avec l'invention, les installations existantes peuvent être facilement améliorées, et ce à faible coût du fait d'une faible consommation électrique et de l'utilisation raisonnable en quantité des utilités mises en oeuvre (air comprimé, réactif...).

De plus, le procédé utilise un dispositif simple dont le fonctionnement en continu présente peu de contraintes d'exploitation, contrairement aux dispositifs de l'art antérieur comme les centrifugeuses par exemple.

L'invention permet également l'obtention d'un résidu solide, sous forme de galette poreuse déshydratée, sans odeur, ou avec une odeur d'humus, particulièrement facile à réutiliser et/ou à épandre.

Dans ce but, l'invention propose notamment un procédé de traitement tel que décrit dans la revendication 1. Avantageusement l'alimentation en boue de l'enceinte ou récipient se fait au travers d'une restriction, la perte de charge déterminée dans l'émulsion étant créée par une deuxième et/ou une troisième restriction. Le nombre de restriction peut également être encore augmenté.

On réalise donc ainsi une ou des séquences pression/dépression qui de façon surprenante créent un état de la matière (émulsion) permettant d'obtenir in fine un gain en siccité supérieur.

On ne cherche pas ici la porosité mais l'extraction de l'eau, en jouant sur le gradient pression/dépression interactif et/ou itératif.

Plus précisément, on utilise le paramètre pression pour travailler la boue organique au niveau de ses liaisons colloïdes, l'apport énergétique étant amené par la pression notamment au droit des organes créateurs de perte de charge, en permettant une ou des surpressions locales assez fortes.

Ainsi en exerçant une première pression, on produit une contrainte forte sur la boue. Celle-ci étant une structure colloïdale faite de matière organique et d'eau, cette pression amène une énergie capable de déstabiliser/casser les liaisons électrostatiques (type coulombiennes) ou dipolaire (type van der waals). Elle fait de ce fait sortir l'eau des fractions organiques.

La dépression suivante va quant à elle produire un mouvement d'accélération des boues et une expansion/étirement vers la zone de moindre pression poursuivant l'effet de déstabilisation/destruction des colloïdes et un effet de cassage des liaisons.

Enfin, à nouveau, on entre dans une séquence de compression puis dépression... pour prolonger/amplifier/produire les effets énoncés plus haut.

Séquence après séquence on crée donc un état de la matière (émulsion) différent permettant d'atteindre l'effet escompté.

Celle-ci peut être à chaque fois encore améliorée en ajoutant une nouvelle séquence de pression/dépression de plus.

La floculation est quant à elle et simplement une matérialisation de la séparation de la phase.

Par pression moyenne on entend une pression moyenne sur le volume de l'enceinte.

On note par ailleurs que l'injection d'air dans le courant de l'effluent lui-même introduit avec une restriction entrainant une perte de charge, crée une aspiration violente de l'air au passage du flux.

Dans l'essentiel du dispositif, l'émulsion est de la boue (phase dispersée) dans l'air (phase continue) qui l'enrobe.

L'émulsion de la boue dans l'air est donc le résultat des actions pression/dépression dues aux restrictions successives telles que revendiquées.

Il est rappelé par ailleurs que la valeur des débits gazeux est classiquement donnée en $Nm^3/h$ (normomètre cubes/h), le volume (en $Nm^3/h$) étant ici considéré à sa valeur rapportée à une pression de 1 bar, une température de 20° C et 0 % d'humidité comme cela est naturellement admis et compris par l'homme du métier, ingénieur dans le domaine du génie chimique.

En présence même d'une légère dépression, on observe en effet une très bonne dispersion de la boue dans le lit gazeux, sachant qu'au passage par les zones de restriction la pression est localement forte et peut amener à une inversion des proportions.

Dans ces zones, la pression s'élève et l'air pénètre mieux la boue, accentuant probablement de ce fait l'effet de porosité exceptionnel observé avec l'invention.

Grâce à ces phénomènes d'émulsion et/ou d'inversion d'émulsions, l'air vient au contact de la boue de façon intime, la floculation figeant le couple air/eau de façon favorable à la désodorisation, la flottation des flocs de boues et leur déshydratation.

On a ainsi pu observer une grande porosité des flocs de boues avec des bulles millimétriques (de 1 à 5 mm) alors que, lors d'une flottation classique, des bulles micrométriques sont créées et servent de média tensioactif de la matière organique.

Dans ces cas connus, la matière monte à la surface à une vitesse de quelques mètres par h, amenant les bulles à s'éclater à la surface du flottateur en laissant éventuellement retomber les flocs en zone moyenne puis en fond de la cuve, la boue ayant une densité légèrement supérieure à l'eau.

Avec l'invention, les flocs ont eux-mêmes une densité largement inférieure à celle de l'eau (masse volumique de la boue de 0,6 à 0,9 $g/cm^3$).

Cette caractéristique très spécifique permet à la boue une grande qualité de flottation, effectuée avec une vitesse améliorée qui rend pérenne de la séparation de phases.

Selon un mode de réalisation, des moyens permettant d'apporter des chocs/dispersion dans le lit fluidisé gazeux sont prévus. Par exemple chaque enceinte est agrémentée de systèmes hydrauliques simples tels que des parois perpendiculaires au flux, des systèmes de ressorts des anneaux raschig etc ...

Avantageusement, l'effluent est introduit dans une enceinte (première ou deuxième enceinte) de petite taille, correspondant par exemple à un volume ≤0,5 % du volume d'effluent passé par heure, (débit) i.e. 50 l pour 10m3/h de boue, par exemple 30 l, voire inférieur ou égal à 5 l. Ceci permet une perte de charge brusque dans le flux de boue par exemple alimentée par des pompes de 10 bars de hauteur d'eau.

Cette première enceinte (ou la deuxième enceinte) est par exemple fermée par une sortie réduite formant venturi, permettant de la maintenir à une surpression ≥ 4 bars absolus, par exemple 5 bars absolu.

La sortie de la première enceinte s'effectue donc par une première et/ou une deuxième restriction favorable à la pénétration de l'air dans l'effluent, injecté en aval de la restriction, par exemple à 10 Nm$^3$/h dans la deuxième enceinte.

En aval, plus ou moins immédiat de cette première restriction une deuxième restriction en tête d'une troisième enceinte et/ou une troisième restriction en tête d'une quatrième enceinte sont par exemple prévues.

Selon le mode de réalisation de l'invention plus particulièrement décrit ici, et en aval plus ou moins immédiat de cette deuxième restriction (quelques centimètres, 1 m ou quelques mètres) il est par ailleurs injecté un floculant qui permet de piéger des bulles micro et millimétriques au contact de la matière en suspension.

Se produit alors un phénomène très intéressant de flottation immédiate des boues, avec une vitesse ascensionnelle de 50 voire 100 et plus m/h. En comparaison les techniques de flottation classiques de boues permettent une vitesse ascensionnelle de 2 à 6 m/h.

Ce phénomène inattendu permet de constituer un matériau auto-drainant à partir de boue colloïdale.

Dans des modes de réalisation avantageux, on a de plus et/ou en outre recours à l'une et/ou à l'autre des dispositions suivantes :

- la première enceinte est de volume inférieur à 3200 cm$^3$, voire à 30 l la première pression étant comprise entre 4 et 10 bars absolus, le débit q étant compris entre 5 m3/h et 30 m3/h, la deuxième pression étant comprise entre 1,2 bars et 4 bars absolus, le débit d'air Q étant compris entre 5 Nm3/h et 200 Nm3/h, et la troisième pression étant comprise entre 1,05 bar et 2 bars absolus ;
- on alimente en émulsion une enceinte intermédiaire entre les deuxième et troisième enceintes ;
- on injecte une deuxième fois de l'air en aval de la première injection dans ladite enceinte intermédiaire, située entre la deuxième et la troisième enceinte à un débit Q' par exemple compris entre 50 et 200 Nm$^3$/h voir plus (i.e. > 200 Nm$^3$/h par exemple 500 Nm$^3$/h ou 1000 Nm$^3$/h);
- les première, deuxième et/ou troisième restrictions sont formées par des venturis ;
- la deuxième enceinte est une colonne de diamètre moyen d et de hauteur H ≥ 10 d, par exemple une colonne > 2 m, par exemple de 3 m par exemple de 5 m ;
- le floculant est un polymère injecté en sortie immédiate (quelques centimètres, par exemple entre 5 cm et 10 cm) de la deuxième ou troisième restriction ;
- on recycle une partie de l'émulsion floculée dans la première enceinte, par exemple en 1/10$^e$ et 1/5$^e$ du débit ou entre 5 % et 30 % du volume de boue sortie du dispositif, par exemple 10 % ou 20 %. Ceci permet d'abaisser la consommation globale de polymère ;
- on effectue un traitement des boues en aval de l'enceinte tubulaire par centrifugation, filtration et/ou pressage ;
- l'air injecté peut être chauffé.

L'invention propose également un dispositif mettant en oeuvre le procédé tel que décrit ci-dessus. Un tel dispositif est décrit dans la revendication 10. Avantageusement les moyens d'alimentation comprennent une première restriction en amont de la deuxième enceinte, la perte de charge déterminée dans l'émulsion étant créée par une deuxième et/ou troisième restriction.

Dans un mode de réalisation avantageux les moyens de dégazage sont situés à l'autre extrémité de la troisième enceinte par rapport à la zone située en aval immédiat de ladite restriction.

Avantageusement il comprend de plus une enceinte intermédiaire entre les deuxième et troisième enceintes et des moyens d'injection d'air en aval de la première injection dans ladite enceinte intermédiaire.

Egalement avantageusement les première, et deuxième restrictions sont formées par des venturis.

Dans un autre mode de réalisation avantageux la deuxième enceinte est une colonne de diamètre moyen d et de hauteur H > 10 d.

En variante, on peut ajouter un réactif améliorant les chocs entre les particules de boues. Il peut par exemple être utilisé à hauteur de 10%, 5%, 1% du taux de MS des boues.

Ce réactif est par exemple du sable, du carbonate de calcium, de la chaux éteinte, etc... Il est introduit en amont de la colonne par exemple au sein d'une cuve de mélange avec la boue liquide (non représentée).

Il peut également être apporté des réactifs d'oxygénation.

L'invention sera mieux comprise à la lecture de la description qui suit de modes de réalisation donnés ci-après à titre d'exemples non limitatifs. La description se réfère aux dessins qui l'accompagnent dans lesquels :

La figure 1 est un schéma de principe d'un dispositif selon le mode de réalisation de l'invention plus particulièrement décrit ici.

La figure 2 est un mode de réalisation d'un autre dispositif selon l'invention.

La figure 3 montre un autre mode de réalisation d'un dispositif selon l'invention.

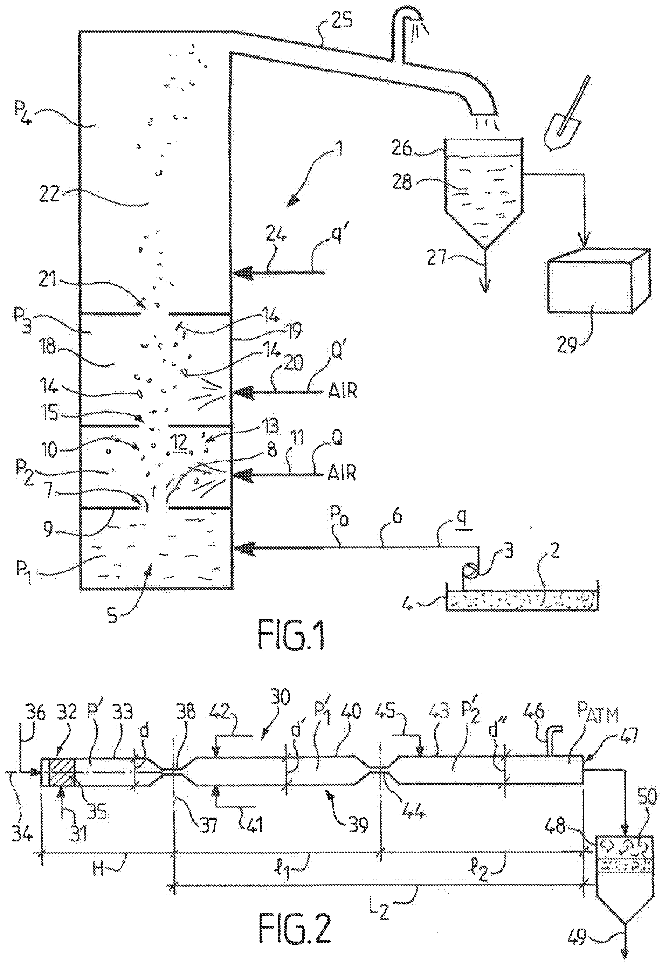

La figure 1 montre schématiquement un dispositif 1 épaississeur de boue 2 aspirée par des moyens 3 (pompe) à partir d'un réservoir ou bassin de stockage 4.

Le dispositif 1 comprend une première enceinte 5 de petit volume par exemple cylindrique ou cubique, par exemple de volume 10 l, de réception de la boue liquide, par exemple à une première pression déterminée $P_1$ un peu inférieure à la pression $P_0$ de sortie de la pompe d'alimentation 3, du fait des pertes de charges du circuit d'alimentation 6 (tube flexible par exemple). Le débit q de la pompe est par exemple compris entre 5 m$^3$/h et 50 m$^3$/h par exemple 10 m$^3$/h, et la première pression déterminée $P_1$ est de 2 bars absolus, $P_0$ étant par exemple de 2,2 bars absolus.

L'enceinte 5 comprend à sa sortie une restriction 7, par exemple formée par un orifice ou ajutage 8, rond, par exemple de diamètre 2 cm, dans une paroi intermédiaire 9, de séparation avec une deuxième enceinte 10, de plus grand volume, par exemple 200 l.

La deuxième enceinte 10, par exemple cylindrique est à une deuxième pression $P_2$ (par exemple 1,8 bar absolu) et est alimentée par exemple en partie basse par de l'air 11 à très fort débit Q = 500 Nm$^3$/h, et une pression de plusieurs bars, par exemple 5 bars créant dans la chambre 12 formée par l'enceinte une émulsion 13 de gouttelettes de boue 14 qui s'évacue par l'intermédiaire d'une deuxième restriction 15 similaire ou identique à la restriction 7.

L'injection d'air dans l'émulsion juste après l'introduction de la boue dans la chambre, facilite le mélange qui se fait dans la partie en accélération après l'ajutage (effet éjecteur à air).

La deuxième restriction 15 débouche sur une enceinte intermédiaire 18, par exemple de volume plus important, par exemple 500 l, formé par un cylindre 19 dont l'intérieur est à une troisième pression $P_3$, par exemple de 1,6 bars absolu.

Une deuxième injection d'air 20 en partie basse de cette enceinte intermédiaire augmente encore la parcellisation ou dilution de la boue dans l'air, l'injection se faisant par exemple à un débit Q' de 200 Nm$^3$/h, avec par exemple 50 Nm3/h < Q' $\leq$ Q.

L'enceinte intermédiaire 18 alimente quant à elle et dans le mode de réalisation décrit ici, via une troisième restriction ou ajutage 21, une troisième enceinte 22, également cylindrique, par exemple de hauteur 3 m, à une quatrième pression $P_4$ décroissante de l'entrée de l'enceinte en 23 à 1,2 bars jusqu'à la pression atmosphérique en partie haute.

La quatrième enceinte comprend une alimentation en floculant 24 (par exemple un polymère connu) à un débit q', par exemple fonction du type et du débit de boue, qui pourra être apprécié par l'homme du métier de façon connue en elle-même pour obtenir une bonne floculation.

Les boues s'évacuent ensuite par exemple gravitairement via une tubulure 25 éventée dans un sac filtrant 26, l'eau épurée 27 étant évacuée vers le bas et la boue épaissie étant quant à elle récupérée par exemple par pelletage pour constituer des blocs épaissis 29, par exemple d'un facteur 20 par rapport la boue liquide 2 en entrée ($\tau$ de MS multiplié par 20 avant égouttage dans le sac filtrant).

La figure 2 montre un autre mode de réalisation d'un dispositif 30 de traitement de boues liquides 31 introduites à une portion d'extrémité 32 d'un récipient 33 allongé autour d'un axe 34 et de hauteur H déterminée, par exemple 1 m.

Le récipient est maintenu à une pression moyenne P' par exemple de 2 bars absolus, et est formé par un cylindre de diamètre d par exemple de 150 mm.

La boue alimente, par exemple par restriction, via une zone réduite 35, par exemple de 10 l située à la portion d'extrémité 32 également alimentée au bout du récipient et en amont de l'introduction de la boue par une arrivée d'air 36 par exemple à une pression P" > P', par exemple 2,5 bars absolus.

L'air est alimenté à très fort débit Q' par exemple 100 Nm$^3$/h, la boue étant quant à elle introduite à un débit Q par exemple de 10 m$^3$/h.

La boue 31 éclate dans l'air qui est en surpression, une légère dépression $\Delta$P existant entre le récipient à l'arrivée de la boue en 35 et la sortie de l'émulsion de boue en aval 37 du récipient.

A la sortie du récipient 33 existe un venturi 38 et/ou une vanne de régulation générant une perte de charge par exemple de 0,4 bar, l'émulsion de boue étant ici évacuée dans une enceinte tubulaire 39 comprenant une première partie 40 cylindrique de diamètre d' (par exemple d' = d) qui se trouve à une pression $P'_1$ < P', par exemple ici de 1,6 bars (dans l'exemple pris), dans laquelle peut être injecté, en aval du venturi, et à proximité de celui-ci (par exemple à 10 cm pour permettre un bon brassage), un réactif en 41, et/ou à nouveau de l'air (piquage 42).

Dans ce mode de réalisation, l'enceinte tubulaire comprend également une deuxième partie cylindrique 43, séparée de la première partie 40 par un deuxième venturi 44, ladite deuxième partie étant de diamètre d" avec par exemple d' = d" = d.

En aval du venturi 44, et à proximité de celui-ci (1 à 10 cm) est prévu une alimentation 45 en floculant, avec des moyens connus en eux-mêmes (pompe doseuse etc...), et un évent 46 de mise à l'atmosphère et/ou une sortie 47 de boue ouverte à l'atmosphère, la pression $P'_2$ dans cette deuxième partie étant donc très rapidement portée à la pression atmosphérique , par exemple de 1,3 bar à la sortie du venturi pour passer rapidement à 1 bars = 1 atmosphère

**5**

à la sortie 47, l'émulsion devenant après l'ajout du floculant une émulsion d'air dans les flocons de boues, qui s'écoulent gravitairement sur la fin.

La longueur totale de l'enceinte $L_2 \approx l_1 + l_2$, est par exemple de 10 m, avec $l_1$ = 3 m et $l_2$ = 7 m, mais d'autres valeurs sont possibles, la proportion entre $l_1$ et $l_2$ étant en général, mais non limitativement telle que $l_1 < l_2$.

Le dispositif 30 comprend de plus un filtre 48 et/ou un bac de décantation pour évacuation de l'eau épurée 49 en partie basse et de la boue déshydratée 50 en partie haute.

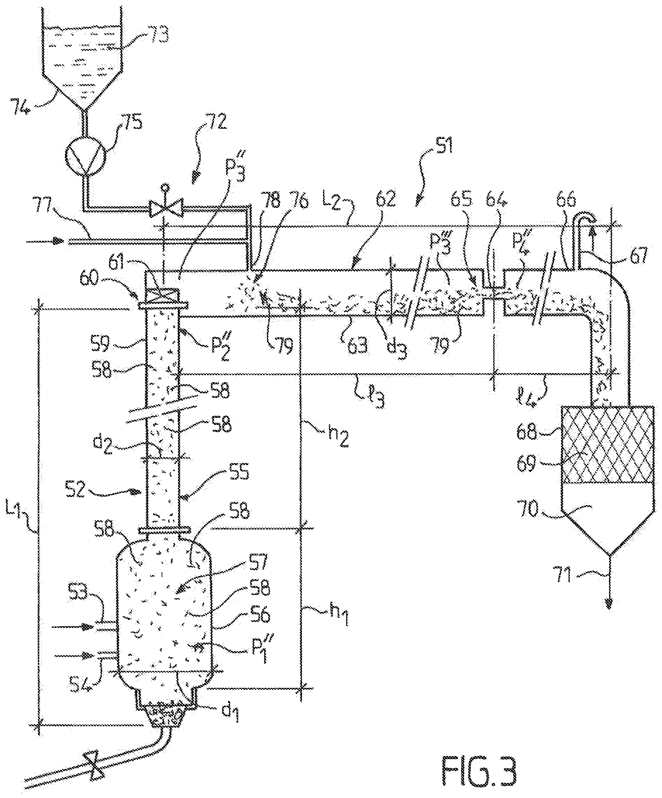

On a représenté sur la figure 3 un troisième mode de réalisation d'un dispositif 51 selon l'invention.

Le dispositif 51 comprend un récipient 52 alimenté par un piquage 53 en partie basse formant alors par exemple une restriction, en boue liquide, et par exemple en dessous (mais cela peut être également au-dessus ou au même niveau) de ce piquage 53, alimenté en air comprimé à fort débit par un deuxième piquage 54.

Plus précisément le récipient est formé par une colonne verticale 55 comprenant une première partie formant un réservoir 56 de mélange/brassage très violent de l'air et de la boue, de petites dimensions par exemple cylindrique de hauteur $h_1$ = 50 cm et de diamètre $d_1$ 30 cm soit un volume de l'ordre de 35 l, permettant d'obtenir la première émulsion 57 de gouttelettes 58 de boue cassée.

Cette émulsion de gouttes dans un fort flux ascendant d'air en pression pénètre ensuite dans une conduite cylindrique 59, prolongeant le réservoir 56, de plus petit diamètre $d_2 < d_1$ par exemple de 10 cm de diamètre et qui s'étend sur une longueur $h_2$ par exemple de 1 m (avec $L_1 = h_1 + h_2$).

Dans cette colonne d'air, le flux gazeux effectue un arrachage (stripping en langue anglo-saxonne) des gaz contenus et/ou issus des boues et notamment de l'ammoniac NH3, réalisant de façon étonnante et dépendante des conditions de fonctionnement et des boues organiques traitées, une élimination quasi complète des gaz indésirables (< quelques ppm) piégés dans les boues.

La longueur $l_2$ est avantageusement dimensionnée pour ce faire par l'homme du métier.

En haut 60 de l'enceinte, une vanne 61 de régulation et/ou une soupape est prévue, d'évacuation vers une enceinte tubulaire 62.

La pression de l'émulsion 57 passe de $P_1''$ (par exemple 3 bars) dans le réservoir initial 56, à $P_2''$ (2,890 bars) un peu inférieur à $P_1$ en partie haute de la colonne 59 du récipient, au niveau de la vanne 61, avec $\Delta P'' = P_2'' - P_1'' =$ quelques millibars, puis à la sortie de la vanne à $P_3''$ = 2 bars (du fait de la perte de charge de la vanne).

Plus précisément l'enceinte 62 comprend un premier tronçon 63 de longueur $l_3$ par exemple 5 m, qui se termine par un venturi 64 faisant passer la pression $P_3''' < P_3''$ à l'extrémité 65 du premier tronçon à une pression $P_4''$ dans un deuxième tronçon 66 de l'enceinte en pente granitaire, muni d'un évent 67, le tronçon 66 étant de longueur $l_4$ par exemple 1 m, avec $L_2 = l_3 + l_4$.

Le tronçon 66 est connecté au filtre 68 de séparation des matières en suspension 69 de la partie liquide 70, que l'on vide en continu en 71, de façon connue en elle-même.

Selon l'invention l'enceinte comprend des moyens 72 d'alimentation en floculant 73 à partir d'un réservoir 74 de préparation par brassage et mélange. Une pompe doseuse 75 amène le floculant dans l'émulsion de boue qui sort du récipient 52 au niveau de la sortie de la vanne 61, ou à proximité immédiate (i.e. quelques cm) dans une zone 76 assez perturbée du fait de la perte de charge générée par ladite vanne 61. $P_3''$ est ici et par exemple passé de $P_2'' \approx 2$ bars à $P_3''$ = 1,4 bar, $P_4''$ étant quant à elle à la pression atmosphérique, ou sensiblement à la pression atmosphérique du fait de l'évent 67.

Dans ce mode de réalisation, il a également été prévu une arrivée d'air complémentaire 77, injectée par exemple avec le floculant par le piquage 78, ou en parallèle.

L'émulsion 79 à la sortie du traitement avec le floculant devient une émulsion d'air dans la boue floculée épaissie.

Les deux tronçons 63 et 66 sont par exemple cylindrique de même diamètre $d_3$ par exemple égal au diamètre moyen du récipient par exemple $\dfrac{d_1 + d_2}{2}$.

Pour 10 m3/h de boue liquide, un flux d'air de 60 Nm³/h minimum, et ce quelque que soit le mode d'injection, le récipient présentant une section de 200 mm pour une hauteur de 5 m, 10 m, 30 m ou plus, on observe un effet de stripping (en langue anglo-saxonne) (arrachage des gaz piégés) très fort, l'air étant intimement mêlé à la boue.

Concernant le floculant, on utilisera de préférence un polymère par exemple cationique.

Exemple, pour une boue contenant 7g/l de MS, on utilise 50 g de polymère brut, par exemple préparé à 5g/l soit une injection de 10 l de solution par m³ de boue. L'injection s'effectue en sortie immédiate de la colonne du récipient.

En variante, on peut ajouter un réactif améliorant les chocs entre les particules de boues. Il peut par exemple être utilisé à hauteur de 10 %, 5 %, 1 % du taux de MS des boues, comme vu précédemment.

Ce réactif est par exemple du sable, du carbonate de calcium, de la chaux éteinte etc... Il est introduit en amont de la colonne par exemple au sein d'une cuve de mélange avec la boue liquide (non représenté).

Il peut également être apporté des réactifs d'oxydations.

Dans certaines applications, par exemple lorsque les boues contiennent beaucoup d'acides gras organiques ou que ces boues sont des boues issues de méthaniseur, on observe en effet d'excellents résultats.

Par exemple dans des proportions de 1 l de H2O2 ou 1 l de S2o8 pour 1 m$^3$ de boue contenant 40 g/l de MS.

Il peut également y avoir apport de réactif d'aide à la coagulation des matières organiques complémentaires.

Par exemple, pour une boue de 11 g/l de MS et 8% de MV (Matière Volatile soit matière organique / matière sèche) (environ matière organique/ matière sèche (?)) et pour 500 ml de boue, il est apporté 1 ml de FeCl3 (solution à 10%) soit à l'introduction du liquide dans la colonne, soit avant l'introduction de floculant (après colonne).

A titre d'exemple il a été réalisé des tests sur boue biologique avec filtre bande, à partir de boues chargées de 26 à 30 g/l en MS avec :

Q' = 50 à 80 Nm3/h
P = 1,7 bar de pression du récipient/réacteur
Q = 3 à 15 m3/h
A la sortie du procédé on obtient des boues à l'aspect poreux, secs, avec un séchage accéléré et une siccité de 25 à 35%.

On observe ainsi que, de façon étonnante et par simple décantation, l'eau permet à son eau déliée de s'évacuer directement gravitairement.

La boue s'assèche alors progressivement, passant de 100 g/l de MS après la 1ère heure, à 130 g/l après 2 h, 160 g/l après 5 h, 350 g/l après 1 mois. (big bag) .

D'autres exemples de traitement suivant le procédé mis en oeuvre, par récupération sur benne filtrante ou sacs filtrants (big bag en langue anglo-saxonne) donnent :

Benne filtrante ; Ex 2 : 130 g/l après 20h et 180 g/l après 8 j
Benne filtrante ; Ex 3 : 100 g/l après 5 h, 130 g/l après 7 j.
Big bag ; Ex 4 : 100 g/l après 24h, 115 g/l après 7j et 221 g/l après 1 mois.
Big bag ; Ex 5 : 144 g/l après 24h, 154 g/l après 7j et 459 g/l après 1 mois.
Big bag ; Ex 4 : 120 g/l après 24h (alors qu'il a plu toute la nuit) et 402 g/l après 1 mois.

A noter que la boue traitée selon l'invention est au départ liquide.

Jusque 30 g/l une dilution n'est a priori pas requise. Mais si la boue est plus dense, par exemple au-delà de 40 g/l, on pourra procéder à une dilution en entrée du dispositif pour permettre un bon fonctionnement du pompage de la boue, qui est rappelons-le une boue organique, c'est à dire dont le taux de MO (Matière Organique) sur le taux de MS (Matière en Suspension) se situe entre 65 % et 85 %. Par Matière Organique on entend essentiellement des phospholipides, polysaccarides, protéines, alcalins, alcalino terreux et/ou métaux etc....

On a donné ci-après un autre exemple de fonctionnement, cette fois en référence à la figure 2 simplifiée (on s'affranchit de la première portion d'enceinte).

Le récipient 33 forme une première chambre en forme de tuyau de 20 cm de diamètre et de 50 cm de longueur, dans laquelle on introduit au débit Q = 10 m3/h, une boue organique (issue d'un clarificateur de station d'épuration communale) à 6 g/l de MS et de l'air comprimé à 50 Nm3/h d'air à 1,9 bar grâce à un surpresseur.

Un orifice de 5 cm2 ferme cette chambre sur une longueur de 10 cm.

En aval immédiat de celui-ci, on introduit dans l'enceinte 43 un floculant par exemple dosé à 10 g/l.

La pression post orifice chute progressivement pour arriver à l'atmosphère après quelques mètres. Par exemple : l'enceinte 43 qui forme une chambre post orifice est aussi un tuyau de 3 m de longueur et 20 cm de diamètre.

A l'extrémité de l'enceinte, l'ensemble des flux rejoint par exemple une poche filtrante (filtre 50) au seuil de coupure de 500 $\mu$m donnant immédiatement une siccité de 10% (ou 100 g/l) et un filtrat clair en 49 de 50 mg d'oxygène (02) par litre (DCO).

Les réactifs sont introduits liquides par des pompes doseuses. Classiquement, plus les boues sont concentrées plus les réactifs doivent être préparés dilués.

La sortie du dispositif s'effectue à l'atmosphère. Mais la mise à l'atmosphère peut éventuellement être régulée dans un mode de réalisation de l'invention, de façon à récupérer la pression de l'appareil de séparation aval.

Les appareils aval sont classiques. On constate que leur efficacité sur la déshydratation est améliorée d'au moins 3%, exemple pour une centrifugeuse qui donne un résultat de 23% de siccité soit 230 g/l de MS, le dispositif placé en amont permet d'atteindre in fine au minimum 26% de siccité soit 260 g/l de MS.

Les appareils utilisables en aval sont les :

• Poches filtrantes (100, 300, 500 $\mu$m ou plus) ouverte ou fermé

- Flottateurs

- Epaississeurs mécaniques

- Presses à vis

- Filtres bandes

- Centrifugeuses

- Filtres presse

A la sortie, les boues peuvent bien évidemment être utilisées en épandage sur le sol, sans ou après compostage, seules ou avec des déchets verts ou autres.

Elles peuvent aussi être séchées sur des lits de séchages simples ou solaires.

On remarque que curieusement, les boues obtenues sont « non odorantes » et ne fermentent pas avec le temps (fermentation anaérobie)

En fait, l'énorme dilution avec l'air permet aux boues de posséder un pouvoir de déshydratation élevé, dû à la présence des bulles d'air.

On a produit ci-après les résultats obtenus avec le dispositif 1 selon l'invention dans les tableaux I, II, III, combinés en aval avec des appareils indiqués, à différents débits de boue.

TABLEAU I : Dispositif + filtre bande

| Test | Siccité Boue entrée dispositif | Débit de boue $M^3/h$ | Débit d'air $Nm^3/h$ | Presssion P bar | Siccité sortie filtre | Remarques | Longueur $L_2$ |
|---|---|---|---|---|---|---|---|
| 2 | 10 | 7,8 | 80 | 1, 7 | 14 | Boue diluée | 6m |
| 3 | 10 | 7, 8 | 95 | 1,2 | 16,5 | Boue diluée | 3m |

TABLEAU II : Dispositif 1 + big bag

| Essai | Type d'essai | Date d'essai | Siccité immédiate | Siccité à 1 j | A 1 mois |
|---|---|---|---|---|---|
| T0 | Témoin sans dispositif uniquement big bag filtrant | 05/04 | 8 % | 10 % | 22 % |
| TESTS 10 JOURS | Dispositif + big bag filtrant Débit de 3 à 12 $m^3/h$ | Mi-avril | 10 à 11 % | 14,5 à 15,5 % | 45,9 % à 53,5 % |

On observe que grâce à une concentration des boues optimisée, obtenue avec l'invention, par exemple de 70 à 130 g/l de MS, celle-ci va très favorablement maximiser la fonction de déshydratation par des outils tels que les centrifugeuses ou un filtre presse, permettant d'améliorer considérablement le rendement de ceux-ci. En effet, l'eau déliée ayant été extraite par le procédé décrit ci-avant, cela permet d'améliorer quasiment systématiquement d'au moins 100 g/l, le taux de MS des boues en sortie.

Comme il va de soi et comme il résulte également de ce qui précède, la présente invention n'est pas limitée aux modes de réalisation plus particulièrement décrits. Elle en embrasse au contraire toutes les variantes et notamment celles où le nombre de portions et/ou tronçons d'enceinte est différent, par exemple supérieur à trois, ou encore le récipient est horizontal avec un seul tronçon.

**Revendications**

1. Procédé de traitement d'une boue organique dans lequel on alimente avec ladite boue, en flux continu à un débit $q(m^3/h)$, soit directement, soit via une première enceinte (5) maintenue à une première pression déterminée ($P_1$), une deuxième enceinte (10, 33, 55) maintenue à une deuxième pression moyenne déterminée ($P_2$, P', P"$_1$, P"2) en

injectant de l'air (11) dans ladite deuxième enceinte (10, 33, 55) à un débit Q(Nm$^3$/h) pour obtenir dans ladite deuxième enceinte (10, 33, 55) une première émulsion, formant une phase dispersée de boue dans une phase continue d'air qui l'enrobe, on crée une perte de charge déterminée dans ladite première émulsion en la faisant passer, par une ou deux restrictions (15, 21, 38, 44) ou par une vanne d'alimentation (61), dans une troisième enceinte (22, 43, 62) maintenue à une troisième pression déterminée ($P_4$, $P'_2$, $P''_3$) dans la zone située en aval immédiat de ladite ou desdites restrictions ou de ladite vanne,
on injecte un floculant (24, 45,78) dans ladite zone de la troisième enceinte pour former à la sortie du traitement une deuxième émulsion d'air dans la boue floculée épaissie,
puis on dégaze (46, 67) ladite deuxième émulsion à la pression atmosphérique avant évacuation,
on récupère ladite deuxième émulsion dans un dispositif de filtration ou de décantation (26, 48, 68),
et on la filtre ou on la décante.

2. Procédé selon la revendication 1, **caractérisé en ce que** l'alimentation en boue de la deuxième enceinte (10, 33, 55) se fait au travers d'une restriction dite première restriction (7), la perte de charge déterminée dans l'émulsion étant créée par une deuxième restriction (15, 38) et une troisième restriction (21, 44) ou alors par une vanne (61) .

3. Procédé selon l'une quelconque des revendications précédentes, **caractérisé en ce que** la première enceinte (7) est de volume inférieur à 3200 cm$^3$, la première pression ($P_1$) étant comprise entre 4 et 10 bars absolus, **en ce que** le débit q est compris entre 5 m$^3$/h et 30 m$^3$/h, la deuxième pression ($P_2$ ; P' ; $P_1''$ ; $P''_2$) est comprise entre 1,2 bars et 4 bars absolus, le débit d'air Q étant compris entre 5 Nm$^3$/h et 200 Nm$^3$/h, et la troisième pression ($P_4$ ; $P'_2$ ; $P_3''$) est comprise entre 1,05 bar et 2 bars absolus.

4. Procédé selon l'une quelconque des revendications précédentes, **caractérisé en ce qu'**on alimente en émulsion une enceinte intermédiaire (18, 40) entre les deuxième (10, 33) et troisième enceintes (22, 43).

5. Procédé selon la revendication 4, **caractérisé en ce qu'**on injecte une deuxième fois de l'air en aval de la première injection dans l'enceinte intermédiaire (18, 40) située entre la deuxième enceinte (10, 33, 55) et la troisième enceinte (22, 43, 62) à un débit Q'.

6. Procédé selon l'une quelconque des revendications précédentes, **caractérisé en ce que** les première, deuxième et/ou troisième restrictions (7, 15, 38, 21, 44) sont formées par des venturis.

7. Procédé selon l'une quelconque des revendications précédentes, **caractérisé en ce que** la deuxième enceinte (10, 33, 55) est une colonne de diamètre moyen d et de hauteur H $\geq$ 10 d.

8. Procédé selon l'une quelconque des revendications précédentes, **caractérisé en ce que** le floculant est un polymère injecté en sortie immédiate de la ou desdites restrictions (21, 44) ou de la vanne (61).

9. Procédé selon l'une quelconque des revendications précédentes, **caractérisé en ce que** on recycle une partie de l'émulsion floculée dans la première enceinte (17).

10. Dispositif (1) de traitement en continu d'une boue organique comprenant
des moyens d'alimentation (3, 6) de ladite boue en flux continu à un débit q, soit directement, soit via une première enceinte (5) maintenable à une première pression ($P_1$), d'une deuxième enceinte (10, 33, 55) maintenable à une deuxième pression moyenne déterminée ($P_2$, P', $P''_1$, $P''_2$) ;
ladite deuxième enceinte (10, 33, 55) ;
des moyens d'injection d'air (11) dans ladite deuxième enceinte (10, 33, 55) à un débit Q, pour obtenir une première émulsion, formant une phase dispersée de boue dans une phase continue d'air qui l'enrobe dans ladite deuxième enceinte (10, 33, 55), une restriction (21, 44) ou vanne (61) agencé pour créer une perte de charge déterminée dans ladite première émulsion, une troisième enceinte (22, 43, 62) maintenable à une troisième enceinte (22, 43, 62) maintenable à une troisième pression déterminée ($P_4$, $P_2'$, $P''_3$) dans la zone située en aval immédiat de ladite restriction (21, 44) ou vanne (61),
des moyens d'injection d'un floculant (24, 45, 78) dans ladite zone de la troisième enceinte (22, 39, 62), pour former une deuxième émulsion d'air dans la boue floculée épaissie,
des moyens (46, 67) de dégazage de ladite deuxième émulsion à la pression atmosphérique,
des moyens de récupération de ladite deuxième émulsion ainsi dégazée dans un dispositif (26, 48, 68) de filtration ou de décantation et
ledit dispositif (26, 48, 68) de filtration ou de décantation.

**11.** Dispositif selon la revendication 10, **caractérisé en ce que** les moyens d'alimentation comprennent une première restriction (7) d'introduction dans la deuxième enceinte, la perte de charge dans l'émulsion étant créée par une deuxième restriction (15, 38) et une troisième restriction (21, 44) ou vanne (61).

**12.** Dispositif selon l'une quelconque des revendications 10 et 11, **caractérisé en ce que** les moyens (46, 67) de dégazage sont situés à l'autre extrémité de la troisième enceinte (22, 43, 62) par rapport à la zone située en aval immédiat de la restriction (21, 44) ou vanne (61) agencée pour créer une perte de charge déterminée dans l'émulsion.

**13.** Dispositif selon l'une quelconque des revendications 10 à 12, **caractérisé en ce qu'**il comprend de plus une enceinte intermédiaire (18, 40) entre les deuxième (10, 33) et troisième (22, 43) enceintes et des moyens d'injection d'air (20, 42) en aval de la première injection dans ladite enceinte intermédiaire.

**14.** Dispositif selon l'une quelconque des revendications 10 à 13, **caractérisé en ce que** les première, deuxième et/ou troisième restrictions (7, 15, 38, 21, 44) sont formées par des venturis.

**15.** Dispositif selon l'une quelconque des revendications 10 à 14, **caractérisé en ce que** la deuxième enceinte (10, 33, 55) est une colonne de diamètre moyen d et de hauteur $H \geq 10\,d$.

**Patentansprüche**

**1.** Verfahren zur Behandlung eines organischen Schlamms, bei dem mit dem Schlamm eine zweite unter einem bestimmten zweiten durchschnittlichen Druck ($P_2$, P', P''1, P''2) gehaltene Kammer (10, 33, 55) mit einem kontinuierlichen Fluss mit einem Durchfluss q($m^3$/h) direkt oder über eine erste unter einem bestimmten ersten Druck ($P_1$) gehaltene Kammer (5) gespeist wird, indem Luft (11) in die zweite Kammer (10, 33, 55) mit einem Durchfluss Q($Nm^3$/h) gespeist wird, um in der zweiten Kammer (10, 33, 55) eine erste Emulsion zu erzielen, die eine dispergierte Schlammphase in einer kontinuierlichen sie umgebenden Luftphase bildet, ein bestimmter Druckverlust in der ersten Emulsion erzeugt wird, indem sie über eine oder zwei Einengungen (15, 21, 38, 44) oder über ein Einlassventil (61) durch eine dritte, unter einem bestimmten dritten Druck ($P_4$, $P'_2$, $P''_3$) gehaltene Kammer (22, 43, 62) in dem Bereich unmittelbar nach der bzw. den Einengungen oder dem Ventil durchgeführt wird,
ein Flockungsmittel (24, 45, 78) in den Bereich der dritten Kammer gespeist wird, um am Ausgang der Behandlung eine zweite Emulsion aus Luft im flokkulierten verdickten Schlamm zu bilden, anschließend die zweite Emulsion bei Luftdruck vor dem Abführen entgast (46, 67) wird,
die zweite Emulsion in einer Filtrier- oder Absetzvorrichtung (26, 48, 68) aufgefangen wird und
sie filtriert oder zum Absetzen gelassen wird.

**2.** Verfahren nach Anspruch 1,
**dadurch gekennzeichnet,**
**dass** die Speisung des Schlamms in die zweite Kammer (10, 33, 55) über eine Einengung, genannt erste Einengung (7), erfolgt, wobei der bestimmte Druckverlust in der Emulsion über eine zweite Einengung (15, 38) und eine dritte Einengung (21, 44) oder aber über ein Ventil (61) erzeugt wird.

**3.** Verfahren nach einem beliebigen der vorhergehenden Ansprüche,
**dadurch gekennzeichnet,**
**dass** die erste Kammer (7) ein Volumen aufweist, das geringer als 3200 $cm^3$ ist, wobei der erste Druck ($P_1$) zwischen 4 und 10 bar absolut liegt, **dass** der Durchfluss q zwischen 5 $m^3$/h und 30 $m^3$/h liegt, der zweite Druck ($P_2$; P'; $P_1$"; $P''_2$) zwischen 1,2 bar und 4 bar absolut liegt, wobei der Luftdurchfluss Q zwischen 5 $Nm^3$/h und 200 $Nm^3$ /h liegt, und der dritte Druck ($P_4$; $P'_2$; $P_3$") zwischen 1,05 bar und 2 bar absolut liegt.

**4.** Verfahren nach einem beliebigen der vorhergehenden Ansprüche,
**dadurch gekennzeichnet,**
**dass** eine Zwischenkammer (18, 40) zwischen der zweiten (10, 33) und der dritten Kammer (22, 43) mit Emulsion gespeist wird.

**5.** Verfahren nach Anspruch 4,
**dadurch gekennzeichnet,**
**dass** Luft ein zweites Mal nach der ersten Speisung in die Zwischenkammer (18, 40) mit einem Durchfluss Q' gespeist wird, welche zwischen der zweiten Kammer (10, 33, 55) und der dritten Kammer (22, 43, 62) angeordnet ist.

**6.** Verfahren nach einem beliebigen der vorhergehenden Ansprüche,
**dadurch gekennzeichnet,**
**dass** die erste, zweite und/oder dritte Einengungen (7, 15, 38, 21, 44) durch Venturirohre gebildet sind.

**7.** Verfahren nach einem beliebigen der vorhergehenden Ansprüche,
**dadurch gekennzeichnet,**
**dass** die zweite Kammer (10, 33, 55) eine Säule mit einem durchschnittlichen Durchmesser d und einer Höhe H $\geq$ 10 d ist.

**8.** Verfahren nach einem beliebigen der vorhergehenden Ansprüche,
**dadurch gekennzeichnet,**
**dass** das Flockungsmittel ein Polymer ist, das unmittelbar am Ausgang der Einengung(en) (21, 44} oder des Ventils (61) gespeist wird.

**9.** Verfahren nach einem beliebigen der vorhergehenden Ansprüche,
**dadurch gekennzeichnet,**
**dass** ein Teil der flokkulierten Emulsion in die erste Kammer (17) rückgeführt wird.

**10.** Vorrichtung (I) für die kontinuierliche Behandlung eines organischen Schlamms, mit
Mitteln (3, 6) für die Speisung einer zweiten unter einem bestimmten zweiten durchschnittlichen Druck ($P_2$, P', P''1, P''2) haltbaren Kammer (10, 33, 55) mit dem Schlamm mit einem kontinuierlichen Fluss mit einem Durchfluss q direkt oder über eine erste unter einem ersten Druck ($P_1$) haltbare Kammer (5),
der zweiten Kammer (10, 33, 55),
Mitteln für die Speisung von Luft (11) in die zweite Kammer (10, 33, 55) mit einem Durchfluss Q, um eine erste Emulsion zu erzielen, die eine dispergierte Schlammphase in einer kontinuierlichen sie umgebenden Luftphase in der zweiten Kammer (10, 33, 55) zu bilden,
einer Einengung (21, 44) oder Ventil (61), welche angeordnet sind, um in der ersten Emulsion einen bestimmten Druckverlust zu erzeugen,
einer unter einem bestimmten dritten Druck ($P_4$, P'$_2$, P''$_3$) haltbaren dritten Kammer (22, 43, 62) in dem Bereich unmittelbar nach der Einengung (21, 44) oder dem Ventil,
Mitteln für die Speisung eines Flockungsmittels (24, 45, 78) in den Bereich der dritten Kammer (22, 39, 62), um in dem flokkulierten verdickten Schlamm eine zweite Luftemulsion zu bilden,
Mitteln (46, 67), um die zweite Emulsion bei Luftdruck zu entgasen,
Mitteln, um die zweite derart entgaste Emulsion in einer Filtrier- oder Absetzvorrichtung (26, 48, 68) aufzufangen wird und der Filtrier- oder Absetzvorrichtung (26, 48, 68).

**11.** Vorrichtung nach Anspruch 10,
**dadurch gekennzeichnet,**
**dass** die Speisungsmittel eine erste Einengung (7) für die Einführung in die zweite Kammer umfassen, wobei der Druckverlust in der Emulsion über eine zweite Einengung (15, 38) und eine dritte Einengung (21, 44) oder über ein Ventil (61) erzeugt wird.

**12.** Vorrichtung nach einem beliebigen der Ansprüche 10 und 11,
**dadurch gekennzeichnet,**
**dass** die Entgasungsmittel (46, 67) sich am anderen Ende der dritten Kammer (22, 43, 62) in Bezug auf den Bereich unmittelbar nach der Einengung (21, 44) oder Ventil (61) angeordnet sind, um einen bestimmten Druckverlust in der Emulsion zu erzeugen.

**13.** Vorrichtung nach einem beliebigen der Ansprüche 10 bis 12,
**dadurch gekennzeichnet,**
**dass** sie ferner eine Zwischenkammer (18, 40) zwischen der zweiten (10, 33) und der dritten Kammer (22, 43) und Mittel (20, 42) für die Speisung von Luft nach der ersten Speisung in die Zwischenkammer umfasst.

**14.** Vorrichtung nach einem beliebigen der Ansprüche 10 bis 13,
**dadurch gekennzeichnet,**
**dass** die die erste, zweite und/oder dritte Einengungen (7, 15, 38, 21, 44) durch Venturirohre gebildet sind.

**15.** Vorrichtung nach einem beliebigen der Ansprüche 10 bis 14,

**dadurch gekennzeichnet,**
**dass** die zweite Kammer (10, 33, 55) eine Säule mit einem durchschnittlichen Durchmesser d und einer Höhe H ≥ 10 d ist.

**Claims**

1. Method for treatment of an organic slurry in which said slurry is supplied continuously at a flow rate q($m^3$/h), either directly or via a first enclosure (5) maintained at a first given pressure ($P_1$), to a second enclosure (10, 33, 55) maintained at a second given mean pressure ($P_2$, P', $P''_1$, $P''_2$) while injecting air (11) into said second enclosure (10, 33, 55) at a flow rate Q($Nm^3$/h) in order to obtain in said second enclosure (10, 33, 55) a first emulsion, forming a dispersed slurry phase in a continuous air phase which coats it, a given loss of pressure is created in said first emulsion by passing it, through one or two restrictions (15, 21, 38, 44) or through a supply valve (61), into a third enclosure (22, 43, 62) maintained at a third given pressure ($P_4$, $P'_2$, $P''_3$) in the zone situated immediately downstream of said restriction or restrictions or said valve,
a flocculant (24, 45, 78) is injected into said zone of the third enclosure in order to form at the exit from treatment a second emulsion of air in the thickened flocculated slurry,
then said second emulsion is degassed (46, 67) at atmospheric pressure before evacuation,
said second emulsion is recovered in a filtration or decanting device (26, 48, 68),
and it is filtered or decanted.

2. Method according to claim 1, **characterised in that** the supply of slurry to the second enclosure (10, 33, 55) is effected through a restriction referred to as the first restriction (7), the given loss of pressure in the emulsion being created by a second restriction (15, 38) and a third restriction (21, 44) or otherwise by a valve (61).

3. Method according to any one of the preceding claims, **characterised in that** the first enclosure (7) has a volume lower than 3200 $cm^3$, the first pressure ($P_1$) being between 4 and 10 bars absolute, **in that** the flow rate q is between 5 $m^3$/h and 30 $m^3$/h, the second pressure ($P_2$; P'; $P_1''$; $P''_2$) is between 1.2 bars and 4 bars absolute, the air flow rate Q being between 5 $Nm^3$/h and 200 $Nm^3$/h, and the third pressure ($P_4$; $P'_2$; $P_3''$) is between 1.05 bars and 2 bars absolute.

4. Method according to any one of the preceding claims, **characterised in that** an intermediate enclosure (18, 40) is supplied with emulsion between the second (10, 33) and third (22, 43) enclosures.

5. Method according to claim 4, **characterised in that** air is injected a second time downstream of the first injection into the intermediate enclosure (18, 40) situated between the second enclosure (10, 33, 55) and the third enclosure (22, 43, 62) at a flow rate Q'.

6. Method according to any one of the preceding claims, **characterised in that** the first, second and/or third restrictions (7, 15, 38, 21, 44) are formed by Venturi tubes.

7. Method according to any one of the preceding claims, **characterised in that** the second enclosure (10, 33, 55) is a column of mean diameter d and height H ≥ 10 d.

8. Method according to any one of the preceding claims, **characterised in that** the flocculant is a polymer injected at the immediate exit of said restriction or restrictions (21, 44) or the valve (61).

9. Method according to any one of the preceding claims, **characterised in that** a portion of the flocculated emulsion is recycled to the first enclosure (17).

10. Device (1) for continuous treatment of an organic slurry, comprising
means (3, 6) for supplying said slurry continuously at a flow rate q, either directly or via a first enclosure (5) which can be maintained at a first pressure ($P_1$), to a second enclosure (10, 33, 55) which can be maintained at a second given mean pressure ($P_2$, P', $P''_1$, $P''_2$);
said second enclosure (10, 33, 55);
means for injecting air (11) into said second enclosure (10, 33, 55) at a flow rate Q, in order to obtain a first emulsion, forming a dispersed slurry phase in a continuous air phase which coats it in said second enclosure (10, 33, 55),
a restriction (21, 44) or valve (61) arranged so as to create a given loss of pressure in said first emulsion,

a third enclosure (22, 43, 62) which can be maintained at a third given pressure ($P_4$, $P_2'$, $P''_3$) in the zone situated immediately downstream of said restriction (21, 44) or valve (61),
means for injecting a flocculant (24, 45, 78) into said zone of the third enclosure (22, 39, 62), in order to form a second emulsion of air in the thickened flocculated slurry,
means (46, 67) for degassing said second emulsion at atmospheric pressure, means for recovery of said second emulsion thus degassed in a filtration or decanting device (26, 48, 68), and
said filtration or decanting device (26, 48, 68).

11. Device according to claim 10, **characterised in that** the supply means comprise a first restriction (7) of introduction into the second enclosure, the loss of pressure in the emulsion being created by a second restriction (15, 38) and a third restriction (21, 44) or valve (61).

12. Device according to either one of claims 10 and 11, **characterised in that** the degassing means (46, 67) are situated at the other end of the third enclosure (22, 43, 62) in relation to the zone situated immediately downstream of the restriction (21, 44) or valve (61) arranged so as to create a given loss of pressure in the emulsion.

13. Device according to any one of claims 10 to 12, **characterised in that** it further comprises an intermediate enclosure (18, 40) between the second (10, 33) and third (22, 43) enclosures and means for injecting air (20, 42) downstream of the first injection into said intermediate enclosure.

14. Device according to any one of claims 10 to 13, **characterised in that** the first, second and/or third restrictions (7, 15, 38, 21, 44) are formed by Venturi tubes.

15. Device according to any one of claims 10 to 14, **characterised in that** the second enclosure (10, 33, 55) is a column of mean diameter d and height H $\geq$ 10 d.

FIG.1

FIG.2

FIG.3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2175897

- FR 2966818